# EUROPÄISCHE PATENTSCHRIFT

(11) **EP 1 695 759 B1**
(45) Veröffentlichungstag und Bekanntmachung des Hinweises auf die Patenterteilung: **16.04.2008**
(21) Anmeldenummer: 05001910.8
(22) Anmeldetag: 31.01.2005
(51) Int. Cl.: B01J 8/04, F23C 99/00, F23D 21/00, C01G 1/02, C01G 49/06

(54) **Verfahren zur Herstellung von nanopartikulären Feststoffen**
Method for producing nano sized solids by using a burner with a porous reaction zone
Méthode de production de solides de tailles nanométriques utiliant un bruleur à zone de réaction poreuse

(43) Veröffentlichungstag der Anmeldung: 30.08.2006
(73) Patentinhaber: BASF SE, 67056 Ludwigshafen (DE)
(72) Erfinder: Kleine Jäger, Frank Dr., 67098 Bad Dürkheim (DE); Prölss, Julian Dr., 67549 Worms (DE)

(56) Entgegenhaltungen:
- WO-A-95/01532
- DE-A1- 19 939 951
- US-A- 3 365 274
- US-A1- 2004 156 986

## Beschreibung

Die Erfindung betrifft ein Verfahren zur Herstellung von nanopartikulären Feststoffen mittels Pecletzahl-stabilisierter Gasphasenumsetzung.

Als Nanopartikel werden Teilchen in der Größenordnung von Nanometern bezeichnet. Sie liegen mit ihrer Größe im Übergangsbereich zwischen atomaren bzw. monomolekularen Systemen und kontinuierlichen makroskopischen Strukturen. Neben ihrer meist sehr großen Oberfläche zeichnen sich Nanopartikel durch besondere physikalische und chemische Eigenschaften aus, welche sich deutlich von denen größerer Teilchen unterscheiden. So haben Nanopartikel einen tieferen Schmelzpunkt, absorbieren Licht erst bei kürzeren Wellenlängen und haben andere mechanische, elektrische und magnetische Eigenschaften als makroskopische Partikel desselben Materials. Durch Verwendung von Nanopartikeln als Bausteine lassen sich viele dieser besonderen Eigenschaften auch für makroskopische Materialien nutzen (Winnacker/Küchler, Chemische Technik: Prozesse und Produkte, (Hrsg.: R. Dittmayer, W. Keim, G. Kreysa, A. Oberholz), Bd. 2: Neue Technologien, Kap. 9, Wiley-VCH Verlag 2004)..

Die Herstellung von Nanopartikeln kann in der Gasphase erfolgen. In der Literatur sind zahlreiche Verfahren zur Gasphasensynthese von Nanopartikeln bekannt, darunter Verfahren in Flammen-, Plasma- und Heißwandreaktoren, Inertgaskondensationsverfahren, Freistrahlsysteme und überkritische Expansion (Winnacker/Küchler, s.o.).

Um Nanopartikel mit möglichst einheitlicher Größe und Morphologie zu erhalten ist es, wie dem Fachmann allgemein bekannt, vorteilhaft, die Gasphasenumsetzung räumlich und zeitlich zu stabilisieren. Hierdurch kann gewährleistet werden, dass alle Eduktteilchen während der Umsetzung nahezu identischen Bedingungen ausgesetzt werden und somit zu einheitlichen Produktteilchen reagieren. Im Gegensatz dazu werden die Edukte in räumlich und zeitlich nicht-stabilisierten Gasphasenreaktionen, wie lodernden Flammen, stark unterschiedlichen thermischen Behandlungen unterzogen, was zu entsprechend inhomogenen Produkten führt.

In US 20040050207 wird die Herstellung von Nanopartikeln mittels eines Brenners beschrieben, wobei die Edukte in einer Vielzahl von Röhren zur Reaktionszone geführt und erst dort vermischt und zur Reaktion gebracht werden. Auf ähnliche Weise werden in US 20020047110 die Herstellung von Aluminiumnitridpulver und in JP 61-031325 die Synthese von optischem Glaspulver erläutert.

DE 10243307 beschreibt die Synthese von Nano-Rußpartikeln. Die Gasphasenreaktion wird zwischen einem porösen Körper, der als Rückschlagsicherung dient, und einer darüber angeordneten Stauplatte durchgeführt. Die Eduktgase werden durch den porösen Körper in den Reaktionsraum geleitet und dort umgesetzt.

Ein Brenner und ein Verfahren zur Herstellung von Kohlenstoff-Nanopartikeln in der Gasphase wird in US 20030044342 beschrieben. Dabei werden die Eduktgase außerhalb eines porösen Körpers umgesetzt.

In EP 1004545 wird ein Verfahren zur pyrogenen Herstellung von Metalloxiden vorgestellt, wobei die Reaktanden durch einen Formkörper mit durchgehenden Kanälen geleitet und in einem Reaktionsraum umgesetzt werden. Die Reaktion kann durch Strahlung auch bereits innerhalb des Formkörpers initiiert werden, die Reaktionszone liegt in der Regel vollständig außerhalb des Formkörpers.

In DE 19939951 wird ein Verfahren und ein Brenner zur Herstellung von HCI und ähnlichen gasförmigen Produkten mit einem Porenkörper zur sicheren Flammenstabilisierung offenbart. Als Rückschlagsicherung wird eine Zone mit kleineren Poren vorgeschlagen, in der die Gasgeschwindigkeit erhöht ist, die eigentliche Reaktion findet dann innerhalb einer zweiten Zone mit größeren Poren statt. Die Herstellung von Nanopartikeln wird nicht beschrieben.

Die Herstellung von nanopartikulären Feststoffen durch Gasphasenumsetzung ist aus US3365274A und US 2004/156986 A bekannt. In WO 95/01532 A wird ein Pecletzahl-stabilisierter Porenbrenners offenbart. Ein solcher Porenbrenner erlaubt die lokale Speicherung von hoher Wärmeenergie, sorgt für eine hohe Turbulenz der GasStröme und damit verbunden für eine höhere Verbrenungsgeschwindigkeit, verbunden mit niedrigen Flammentemperaturen.

Es ist bekannt, poröse Strukturen, z.B. Keramiken, als Stabilisatoren bei Verbrennungsreaktionen einzusetzen, die der direkten oder indirekten Beheizung, beispielsweise von Gebäuden oder zur Warmwasserbereitung, dienen (K. Wawrzinek, VDI-Fortschrittsberichte, Reihe 3, Nr. 785, 2003). Dabei wird eine möglichst vollständige Ausnutzung der in den, meist gasförmigen, Brennstoffen als Heizwert gespeicherten chemischen Energie angestrebt. Die Verbrennungsbedingungen sind dabei grundsätzlich oxidierend, d.h. es wird ein Sauerstoffüberschuss eingesetzt, um einen möglichst vollständigen Ausbrand zu gewährleisten. Wie in EP 1004545 dient in einer ersten Variante eine poröse Struktur einer gleichmäßigen Zufuhr von Brennstoff und Luft, meist vollständig vorgemischt, in eine außerhalb der Struktur liegende Verbrennungszone. Die Stabilisierung erfolgt bei niedrigen Strömungsgeschwindigkeiten und führt zu einem ebenen Flammenteppich aus durch die Poren bedingten Einzelflämmchen. Durch Wärmeaustausch zwischen der Flammenzone und der Oberfläche der Struktur resultiert eine hohe Temperatur des Stabilisatorkörpers und entsprechend eine Vorwärmung des zugeführten Brennstoff/Luft-Gemischs. Daraus resultieren die stabilisierenden Eigenschaften dieser Brennerform, die auch als keramischer Flächenbrenner bezeichnet wird. Durch die guten Strahlungseigenschaften der keramischen Oberfläche resultieren hohe Wärmeübertragungsraten durch Strahlungswärme, so dass sich dieser Brenner zur Strahlungsbeheizung, z.B. für große Industriehallen eignet.

Es ist auch bereits bekannt, dass die Verbrennung vorgemischter Gase teilweise oder vollständig innerhalb einer porösen Struktur erfolgen kann. So beschreibt K. Pickenäcker in ihrer Dissertation, Universität Erlangen-Nürnberg, publiziert in VDI Fortschrittsberichte, Reihe 6, Nr. 445 (2000) emissionsarme Gasheizsysteme auf der Basis stabilisierter Verbrennung in porösen Medien. Ein Einsatz dieser Porenbrenner zur Herstellung nanopartikulärer Feststoffe ist nicht beschrieben.

Eine Aufgabe der vorliegenden Erfindung bestand darin, die Verfahren zur Herstellung von Nanopartikeln weiter zu verbessern. Insbesondere sollte ein Verfahren bereitgestellt werden, mit dem man nanopartikuläre Feststoffe aufgrund einer einheitlichen Temperatur- und Verweilzeithistorie mit möglichst einheitlicher Teilchengröße in guter Ausbeute herstellen kann. Darüber hinaus sollte ein Verfahren zur Verfügung gestellt werden, das sehr variabel und zudem skalierbar ist, d.h. mittels dessen sich aus unterschiedlichsten Einsatzstoffen bei unterschiedlichsten Bedingungen sicher und zuverlässig nanopartikuläre Feststoffe in hoher Qualität herstellen lassen.

Überraschenderweise wurde gefunden, das diese Aufgabe durch ein Verfahren gelöst werden kann, bei dem man ein geeignetes Reaktionsgemisch einer Umsetzung unterzieht, die zumindest teilweise innerhalb eines porösen Mediums erfolgt.

Gegenstand der vorliegenden Erfindung ist daher ein Verfahren zur Herstellung von nanopartikulären Feststoffen durch eine Pecletzahl-stabilisierte Gasphasenumsetzung, bei dem man
a) ein Reaktionsgas bereitstellt,
b) das Reaktionsgas durch wenigstens eine ein poröses Medium enthaltende Reaktionszone führt und dabei einer durch das Medium stabilisierten Umsetzung unterzieht, die zumindest teilweise im Inneren des porösen Mediums erfolgt, wobei nanopartikuläre Primärteilchen gebildet werden,
c) das in Schritt b) erhaltene Reaktionsprodukt im Anschluss an die Umsetzung einer schnellen Abkühlung unterzieht und
d) die gebildeten nanopartikulären Feststoffe isoliert.

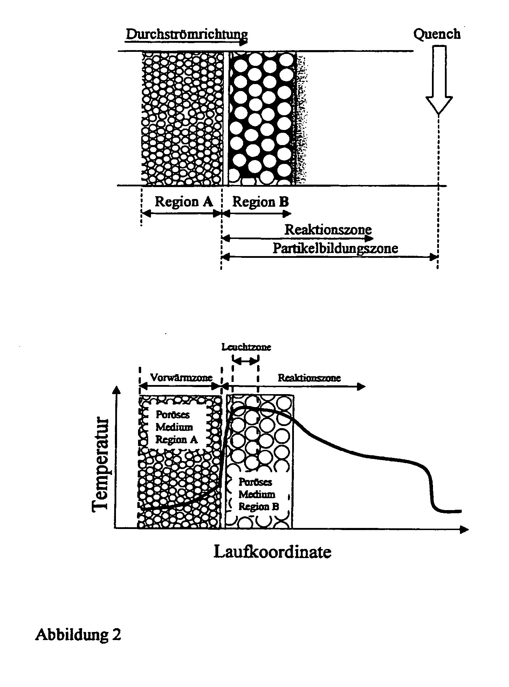

Unter Stabilisierung einer Umsetzung wird im Rahmen der vorliegenden Erfindung sowohl eine örtliche als auch eine zeitliche Stabilisierung verstanden. Die Induktion (Zündung) der Umsetzung erfolgt beim Eintritt des Reaktionsgemisches in die Reaktionszone, die zumindest teilweise von einem porösen Medium ausgefüllt wird. Es tritt weder eine Rückzündung in einen Bereich stromaufwärts der Reaktionszone noch ein unkontrolliertes Fortschreiten der Umsetzung in Strömungsrichtung auf. Über die gesamte Zeitdauer der Umsetzung können zudem Reaktionsprodukte erhalten werden, deren stoffliche Zusammensetzung sich nach dem Verlassen der Reaktionszone nicht mehr wesentlich ändert. Die Induktion der Umsetzung ist gekennzeichnet durch einen sprunghaften Anstieg der Temperatur des bereitgestellten Reaktionsgemisches innerhalb eines räumlich eng begrenzten Bereichs beim Eintritt in die Reaktionszone (s. Abb. 2).

Erfindungsgemäß erfolgt die Stabilisierung der Umsetzung nach dem Konzept der sogenannten Peclelzahl-Stabilisierung. Die Pécletzahl Pe ist definiert als das Verhältnis von Wärmeproduktion durch die Reaktion zur Wärmeabfuhr durch die Temperaturleitfähigkeit des Gases: Pe = (sₗ d)/a (sₗ = laminare Flammengeschwindigkeit, d = äquivalente Porengröße, a = Temperaturleitfähigkeit des Gasgemischs). Bei der Pecletzahl-Stabilisierung wird ein Reaktor eingesetzt, der mindestens zwei Teilzonen umfasst, beispielsweise eine erste Teilzone (Region A) und eine zweite Teilzone (Region B). Die erste Teilzone dient dabei gleichzeitig als Flammensperre und als Vorwärmzone und zeichnet sich dadurch aus, dass in dieser Zone mehr Wärme abgeführt wird als durch Wärmeeintrag oder Vorreaktionen erzeugt werden könnte. In der zweiten Teilzone erfolgt ein merklicher Wärmeübergang zwischen Fest- und Gasphase, wodurch die Verbrennung stabilisiert wird. Die zweite Teilzone (Region B) ist Teil der sich stromabwärts anschließenden Reaktionszone. Erfindungsgemäß befindet sich innerhalb dieser zweiten Teilzone die sogenannte Leuchtzone als Ort der größten Reaktionsdichte und in der Regel auch der höchsten Temperatur (vgl. R. Günther, Verbrennungen und Feuerungen, S. 67-73, Springer-Verlag 1974). Die erste Teilzone (Region A) kann Teil eines porösen Mediums sein, z.B. in Form eines ersten Teilmediums mit einer ersten Porengröße, die kleiner ist als die des zweiten Teilmediums (zweite Teilzone, Region B). Die erste Teilzone kann auch strömungstechnisch verwirklicht werden, z.B. durch ein Rohr geeigneten Querschnitts, das mit ausreichend hoher Geschwindigkeit durchströmt wird. Die zweite Teilzone umfasst ein poröses Medium, wobei sich die Leuchtzone vollständig in diesem porösen Medium befindet. Die Reaktionszone kann vollständig innerhalb eines porösen Mediums liegen oder sich über das poröse Medium hinaus erstrecken. Die Pécletzahl Pe gibt für jeden Punkt eines Reaktors (Vorvvärmzone, Leuchtzone, Reaktionszone) an, ob eine stabile Verbrennung stattfindet. Vorzugsweise liegt die Pécletzahl in der ersten Teilzone (Region A) unterhalb von 50. Geeignete Pécletzahlen für die Reaktionszone liegen, bei Abwesenheit eines Katalysators, beispielweise in einem Bereich von 50 bis 70.

Erfindungsgemäß erfolgt die Umsetzung des Reaktionsgases in einem Reaktor, der wenigstens ein poröses Medium enthält, wobei die Umsetzung zumindest teilweise im Inneren des porösen Mediums erfolgt. In jedem Fall liegt die Leuchtzone innerhalb des porösen Mediums (Region B). Die Induktion der Umsetzung erfolgt in der Regel im Inneren des porösen Mediums (Region B). In seltenen Fällen kann die Induktion auch bereits in der Region A einsetzen.

In einer geeigneten Ausführungsform kann die Reaktionszone stromabwärts über das poröse Medium hinausgehen. Die in diesem Bereich auftretende Flamme ist charakterisiert durch makroskopischen Wärmetransport, aber im Wesentlichen keinen makroskopischen Stofftransport entgegen der Strömungsrichtung. Bei dieser Ausführung ist es möglich, dass das poröse Medium von der Längenausdehnung klein gegenüber der Gesamtreaktionszone ist und die Länge des porösen Mediums beispielsweise maximal 90 %, bevorzugt maximal 50 %, insbesondere maximal 20 % bezogen auf die Gesamtlänge der Reaktionszone beträgt.

Vorzugsweise weist das poröse Medium ein Porenvolumen von mindestens 40 %, bevorzugt mindestens 75 %, bezogen auf das Gesamtvolumen des Mediums auf.

Als poröse Medien geeignete Materialien sind beispielsweise übliche Füllkörper, wie Raschig-Ringe, Sattelkörper, Pall®-Ringe, Drahtspiralen oder Maschendrahtringe, die aus unterschiedlichen Materialien beschaffen sein können, und die sich für eine Beschichtung mit einer katalytisch aktiven Komponente eignen. Die Füllkörper können in einer geeigneten Ausführung als lose Schüttung in die Reaktionszone gegeben werden.

Erfindungsgemäß können als poröse Medien Formkörper eingesetzt werden, die aufgrund ihrer Form einfach in den Reaktor eingebaut werden können. Diese weisen aufgrund ihres Porenvolumens eine große spezifische Oberfläche auf. Derartige Formkörper werden im folgenden auch als Monolithe bezeichnet. Die Formkörper bzw. Monolithe können beispielsweise aus Geweben, Gestricken, Folien, Streckmetallen, Wabenstrukturen und/oder Blechen aufgebaut sein. Bevorzugt sind Monolithe. Diese können beispielsweise aus Keramik bestehen.

Besonders bevorzugt werden poröse Medien in Form von Schaumkeramiken eingesetzt.

Geeignete Gewebe sind beispielsweise aus Fasern aus den unten genannten oxidischen Materialien, wie Al₂O₃ und/oder SiO₂ oder aus webbaren Metalldrähten. Aus den genannten Drähten und Fasern lassen sich Gewebe unterschiedlicher Webart herstellen, wie glatte Gewebe, Köpergewebe, Tressengewebe und andere Spezialbindungsgewebe. Diese Gewebe können zu mehrlagigen Gewebeverbänden zusammengefasst werden.

Erfindungsgemäß können auch poröse Formkörper verwendet werden, die aus mehreren Lagen gewellter, geknickter und/oder glatter Gewebe aufgebaut sind, wobei die Lagen so angeordnet sind, dass sie keinen erhöhten Strömungswiderstand bilden. Monolithe, in denen die Gewebe teilweise oder vollständig durch Bleche, Gestricke oder Streckmetalle ersetzt sind, können ebenfalls verwendet werden. Darüber hinaus ist es auch möglich, dass das poröse Medium aus unterschiedlichen Materialien aufgebaut ist. Beispielsweise kann das poröse Medium schichtförmig, d.h. aus 2 oder mehr Schichten, aufgebaut sein, wobei jede der Schichten aus einem anderen Material besteht. So lassen sich poröse Medien mit abnehmenden oder zunehmenden Porengrö-ßen oder auch Porengrößengradienten verwirklichen.

Geeignete Werkstoffe für die porösen Medien sind z.B. oxidische Materialien, wie Al₂O₃, ZrO₂ und/oder SiO₂. Geeignet sind weiterhin SiC-Werkstoffe. Geeignet sind auch temperaturbeständige metallische Werkstoffe, beispielsweise aus Eisen, Federstahl, Monel, Chromstahl, Chromnickelstahl, Titan, CrNiTi-Stähle und CrNiMo-Stähle oder hitzebeständige Stähle mit den Werkstoffnummern 1.4016, 1.4767, 1,4401, 2.4610, 1.4765, 1.4847, 1.4301, 1.4742. Ganz besonders bevorzugt werden als poröse Medien Körper aus Al₂O₃, ZrO₂, SiO₂, SiC, kohlenstoffverstärktem SiC oder SiC mit Siliciumbindern eingesetzt.

Die porösen Medien können in der Region B zusätzlich wenigstens eine katalytisch aktive Komponente umfassen. Diese befindet sich vorzugsweise auf der Oberfläche der zuvor genannten porösen Medien. Die Beschichtung der Katalysatorträger mit der katalytisch aktiven Komponente erfolgt nach den für sie üblichen Methoden, wie Tränken und anschließendes Kalzinieren. Als katalytisch aktive Komponenten kommen insbesondere die Metalle Rh, Pd, Pt, Ru, Fe, Ni, Co, Cu oder V sowie Mischungen der Metalle in Betracht.

Vorzugsweise ist die Reaktionszone als ein System mit geringer Rückvermischung ausgestaltet. Dies weist vorzugsweise im Wesentlichen keinen makroskopischen Stofftransport entgegen der Strömungsrichtung auf.

Bei der nach dem erfindungsgemäßen Verfahren durchgeführten Gasphasenumsetzung kann es sich prinzipiell um eine beliebige chemische Umsetzung handeln, welche zur Bildung nanopartikulärer Feststoffe führt. Bevorzugte Ausführungsformen sind Oxidations-, Reduktions-, Pyrolyse- und Hydrolysereaktionen. Weiterhin kann es sich bei der Umsetzung sowohl um ein allothermes Verfahren, bei dem die zur Umsetzung erforderliche Energie von außen zugeführt wird, als auch um ein autothermes Verfahren, bei dem die erforderliche Energie aus einer Teilumsetzung eines Einsatzstoffes resultiert, handeln.

Typische Produkte, welche mit dem erfindungsgemäßen Verfahren als nanopartikuläre Feststoffe erhalten werden können, sind Ruß, Oxide von mindestens einem der Elemente Si, Al, Ti, In, Zn, Ce, Fe, Nb, Zr, Sn, Cr, Mn, Co, Ni, Cu, Ag, Au, Pt, Pd, Rh, Ru, Bi, Ba, B, Y, V, außerdem Hydride von mindestens einem der Elemente Li, Na, K, Rb, Cs, weiterhin Sulfide wie MoS₂, Carbide, Nitride sowie elementare Metalle oder Halbmetalle wie Li, Na, In, Sn, Ge, P, As, Sb sowie deren Gemische.

Die Teilchengröße der nach dem erfindungsgemäßen Verfahren hergestellten nanopartikulären Feststoffe liegt üblicherweise im Bereich von 1 bis 500 nm, bevorzugt 2 bis 100 nm. Die nach dem erfindungsgemäßen Verfahren hergestellten nanopartikulären Feststoffe weisen eine Teilchengrößenverteilung auf, deren Standardabweichung σ kleiner als 1.5 ist.

Das erfindungsgemäße Verfahren ermöglicht die Herstellung von nanopartikulären Feststoffen ausgehend von einer Vielzahl verschiedener Einsatzstoffe und eventuell weiterer Komponenten. Geeignete Verfahrensausgestaltungen zur Gewinnung wenigstens eines der zuvor genannten Produkte werden im Folgenden näher beschrieben.

Die Steuerung des Ablaufs der Gasphasenumsetzung kann, neben weiteren, über folgende Parameter erfolgen:
- Zusammensetzung des Reaktionsgases (Art und Menge der Einsatzstoffe, zusätzliche Komponenten, inerte Bestandteile) und
- Reaktionsbedingungen bei der Umsetzung (Reaktionstemperatur, Verweilzeit, Zuführung der Einsatzstoffe in die Reaktionszone, Anwesenheit von Katalysatoren).

Das erfindungsgemäße Verfahren zur Herstellung nanopartikulärer Feststoffe kann in folgende Teilschritte unterteilt werden, welche nachfolgend näher beschrieben werden.

### Schritt a)

Zur Umsetzung wird ein Reaktionsgas bereitgestellt, welches als Bestandteile wenigstens einen Einsatzstoff und eventuell eine oder mehrere weitere Komponenten enthalten kann.

Hierbei umfasst das in Schritt a) bereitgestellte Reaktionsgas wenigstens einen Einsatzstoff, welcher sich vorzugsweise in die Gasphase überführen lässt, so dass er unter den Reaktionsbedingungen gasförmig vorliegt, und der durch eine chemische Reaktion zu einem nanopartikulären Feststoff umgesetzt werden kann. Je nach gewünschtem Produkt kann es sich bei dem Einsatzstoff um eine Elementwasserstoffverbindung handeln, beispielsweise einen Kohlenwasserstoff, einen Borwasserstoff, einen Phosphorwasserstoff oder Metallhydride, weiterhin Metallcarbonyle, Metallalkyle, Metallhalogenide wie Fluoride, Chloride, Bromide oder lodide, Metallsulfate, Metallnitrate, Metall-Olefin-Komplexe, Metallalkoxide, Metallformiate, Metallacetate, Metalloxalate oder Metallacetylacetonate.

Das Reaktionsgas kann als weitere Komponente ein Oxidationsmittel enthalten, beispielsweise molekularen Sauerstoff, sauerstoffhaltige Gasgemische, Sauerstoff enthaltende Verbindungen und Mischungen davon. In einer bevorzugten Ausführungsform wird als Sauerstoffquelle molekularer Sauerstoff eingesetzt. Diese ermöglicht den Gehalt des Reaktionsgases an inerten Verbindungen gering zu halten. Es ist jedoch auch möglich als Sauerstoffquelle Luft oder Luft-/Sauerstoffgemische einzusetzen. Als Sauerstoff enthaltende Verbindungen werden beispielsweise Wasser, vorzugsweise in Form von Wasserdampf, und/oder Kohlendioxid eingesetzt. Beim Einsatz von Kohlendioxid kann es sich um recycliertes Kohlendioxid aus dem bei der Umsetzung erhaltenen gasförmigen Reaktionsprodukt handeln.

In einer weiteren Ausführungsform kann das Reaktionsgas als weitere Komponente ein Reduktionsmittel enthalten, ausgewählt unter molekularem Wasserstoff, Ammoniak, Hydrazin, Methan, wasserstoffhaltigen Gasgemischen, Wasserstoff enthaltende Verbindungen und Mischungen davon.

Weiterhin kann das Reaktionsgas als weitere Komponente ein Brenngas enthalten, welches die zur Umsetzung erforderliche Energie liefert. Dabei kann es sich um H₂/O₂-Gasgemische, H₂/Luftgemische, Mischungen aus Methan, Ethan, Propan, Butanen, Ethylen oder Acetylen mit Luft oder anderen sauerstoffhaltigen Gasgemischen handeln.

Das in dem erfindungsgemäßen Verfahren eingesetzte Reaktionsgas kann zusätzlich zu den bisher genannten Bestandteilen, welche sowohl einzeln als auch gemeinsam anwesend sein können, noch wenigstens eine weitere Komponente enthalten. Dazu zählen beispielsweise die eventuell zurückgeführten gasförmigen Reaktionsprodukte, Rohsynthesegas, CO, CO₂ sowie weitere Gase zur Beeinflussung der Ausbeute und/oder Selektivität bestimmter Produkte, wie Wasserstoff oder inerte Gase wie Stickstoff oder Edelgase. Weiterhin können auch feinverteilte Feststoffe als Aerosole zugeführt werden. Hierbei kann es sich beispielsweise um Feststoffe handeln, deren Teilchengrößen im gleichen Bereich liegen wie die der nach dem erfindungsgemäßen verfahren erhältlichen nanopartikulären Feststoffe, welche zur Modifizierung, Nachbehandlung oder Beschichtung dem Verfahren unterworfen werden sollen.

Besteht das in Schritt a) eingesetzte Reaktionsgas aus mehr als einem Bestandteil, so werden diese Bestandteile vorzugsweise vor der Umsetzung zumindest teilweise miteinander vermischt. Dabei unterscheidet man folgende Arten der Vermischung:
- makroskopisches Mischen: Der Transport des Materials erfolgt durch große Wirbel (distributives Mischen) sowie durch Bildung feinerer Strukturen aufgrund von Wirbelkaskaden (dispersives Mischen). Im Fall laminarer Strömung findet die makroskopische Vermischung durch laminares Falten statt, das in dem erfindungsgemäßen Verfahren durch das poröse Medium oder andere Einbauten bewirkt wird (laminares Mischen). Beim makroskopischen Mischen erfolgt das Mischen im Wesentlichen durch Trägheitskräfte und Konvektion.
- mesoskopisches Mischen: Die kleinsten Wirbel rollen Schichten unterschiedlicher Spezieskonzentration auf (Engulfment). Durch Streckung der Wirbel wird die Dicke der einzelnen laminaren Schichten verringert (Deformation). Beim mesoskopischen Mischen erfolgt das Mischen im wesentlichen durch Konvektion und viskose Kräfte.
- mikroskopisches Mischen: Auf dieser feinsten Längenskala erfolgt die Vermischung ausschließlich durch molekulare Diffusion.
Vorzugsweise liegen bei dem erfindungsgemäßen Verfahren die Ausgangskomponenten vor Einsetzen der Umsetzung zumindest makroskopisch vermischt vor.

Unter Bereitstellen ist erfindungsgemäß zu verstehen, dass man das zur Umsetzung vorgesehene Reaktionsgas in einer geeigneten Apparatur erzeugt oder bevorratet, aus der es der Reaktionszone zugeführt werden kann. Dafür geeignete Vorrichtungen sind dem Fachmann an sich bekannt.

### Schritt b)

Schritt b) des erfindungsgemäßen Verfahren umfasst prinzipiell die folgenden Einzelschritte: gegebenenfalls Vorwärmen wenigstens eines Bestandteils des Reaktionsgases, gegebenenfalls Vermischen wenigstens eines Teils der Bestandteile, Induktion der Reaktion, Umsetzung. Induktion der Reaktion und Umsetzung gehen im Allgemeinen unmittelbar ineinander über.

Vor der Umsetzung können die das Reaktionsgas bildenden Bestandteile teilweise oder vollständig vorgemischt werden. In einer bevorzugten Ausführung erfolgt eine homogene Vermischung der Bestandteile vor der Umsetzung. Diese Vormischung kann, wie zuvor beschrieben, durch makroskopisches Mischen erfolgen, welches z.B. durch ein poröses Medium oder andere Einbauten wie statische Mischer bewirkt wird.

Vor, während oder nach dem Vormischen oder auch anstelle des Vormischens kann ein Teil der oder können alle Bestandteile des Reaktionsgases vorgewärmt werden. Flüssige Komponenten werden vor der Umsetzung vorzugsweise verdampft.

Beim Durchgang durch die Reaktionszone wird das Reaktionsgas auf eine Temperatur von vorzugsweise höchstens 1800°C aufgeheizt. Dies kann durch Zufuhr von Energie und/oder eine exotherme Reaktion des Reaktionsgases erfolgen. Die Umsetzung erfolgt erfindungsgemäß zumindest teilweise im Inneren des porösen Mediums der Region B, wobei die Leuchtzone stets innerhalb des porösen Mediums liegt. Die Induktion kann beispielsweise durch eine entsprechend starke Außenerwärmung des porösen Mediums am Beginn der Reaktionszone erfolgen. Die Induktion kann weiterhin durch einen in das poröse Medium integrierten oder zwischen den Regionen A und B befindlichen Zündbrenner erfolgen. Die Induktion kann außerdem durch kurzzeitiges Einbringen eines Katalysators in die Induktionszone erfolgen.

Bei der Induktion der Umsetzung in Gegenwart eines Katalysators unterscheidet man die einmalige Induktion durch einen zu diesem Zweck eingebrachten und nach der Induktion wieder entfernten Katalysator und die dauerhafte Induktion durch einen permanent in dem porösen Medium befindliche Katalysator. Vorzugsweise erfolgt weder eine Induktion noch die Umsetzung in Gegenwart eines Katalysators.

An die Induktion der Umsetzung schließt sich die Umsetzung in der Reaktionszone an. Dabei kann sich die Reaktionszone, wie zuvor ausgeführt, vollständig innerhalb des porösen Mediums befinden oder auch stromabwärts über das poröse Medium hinausgehen. In beiden Fällen ist die Reaktionszone charakterisiert durch makroskopischen Wärmetransport, aber im Wesentlichen keinen makroskopischen Stofftransport entgegen der Strömungsrichtung. Innerhalb der Reaktionszone tritt im Wesentlichen kein Temperaturgradient senkrecht zur Strömungsrichtung auf.

Im Zuge der Umsetzung entstehen erfindungsgemäß nach erfolgter Keimbildung zunächst nanopartikuläre Primärpartikel, welche durch Koagulations- und Koaleszenzvorgänge einem weiteren Partikelwachstum unterliegen können. Partikelbildung und - wachstum erfolgen typischerweise in der gesamten Reaktionszone und können auch noch nach Verlassen der Reaktionszone bis zur schnellen Abkühlung weiter fortschreiten (s. Abb. 2, Partikelbildungszone). Entsteht während der Umsetzung mehr als ein festes Produkt, so können die gebildeten unterschiedlichen Primärpartikel auch miteinander agglomerieren, wobei nanopartikuläre Produktgemische entstehen. Erfolgt während der Umsetzung die Bildung mehrerer verschiedener Feststoffe zu unterschiedlichen Zeiten, so können auch umhüllte Produkte entstehen, bei denen die zuerst gebildeten Primärpartikel eines Produkts von Schichten eines oder mehrerer anderer Produkte umgeben sind. In einer weiteren Ausführungsform erfolgt eine separate Feststoffzugabe in die Reaktionszone. Die Steuerung dieser Agglomerationsprozesse kann außer durch die Zusammensetzung des Reaktionsgases sowie der Umsetzungsbedingungen auch durch Art und Zeitpunkt der in Schritt c) beschriebenen Abkühlung des Reaktionsprodukts gesteuert werden.

Vorzugsweise erfolgt die Umsetzung in Schritt b) bei einer Temperatur im Bereich von 600 bis 1800°C, bevorzugt von 800 bis 1500°C.

Vorzugsweise beträgt die Verweilzeit des Reaktionsgemischs in der Reaktionszone 0,002 s bis 2 s, besonders bevorzugt 0,005 s bis 0,2 s.

Die Reaktion zur Herstellung der erfindungsgemäßen nanopartikulären Feststoffe kann nach dem erfindungsgemäßen Verfahren bei beliebigem Druck, bevorzugt im Bereich von 0.05 bar bis 5 bar, insbesondere bei atmosphärischem Druck erfolgen.

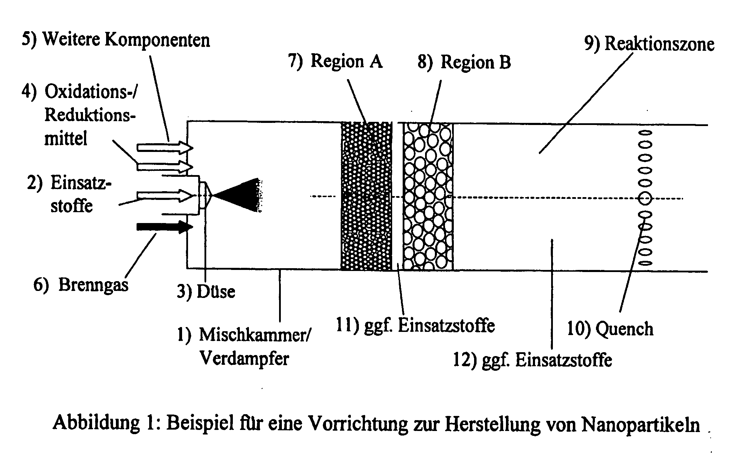

Geeignete Vorrichtungen, mit denen das erfindungsgemäße Verfahren ausgeführt werden kann, sind dem Fachmann an sich bekannt. Die Figur 1 zeigt ein Beispiel für eine geeignete Vorrichtung. Darin sind folgende Teile enthalten:
1. Verdampfer/Mischkammer
2. Einsatzstoffzugabe
3. Düse
4. Oxidations-/Reduktionsmittelzugabe
5. Zugabe weiterer Komponenten
6. Brenngaszugabe
7. Flammensperre (Region A)
8. Poröses medium (Region B)
9. Reaktionszone
10. Quenchgaszugabe
11., 12. ggf. weitere Einsatzstoffzugabe.

Zur Umsetzung in Schritt b) kann weiterhin vorteilhaft ein Porenbrenner eingesetzt werden, wie er in der Dissertation von K. Pickenäcker, Universität Erlangen-Nürnberg, VDI Fortschrittsberichte, Reihe 6, Nr. 445 (2000) beschrieben ist, worauf hier in vollem Umfang Bezug genommen wird.

### Schritt c)

An die Umsetzung des Reaktionsgases in Schritt b) schließt sich erfindungsgemäß eine schnelle Abkühlung des erhaltenen Reaktionsprodukts in Schritt c) an. Diese kann durch direkte Kühlung, indirekte Kühlung, Expansionskühlung oder eine Kombination aus direkter und indirekter Kühlung erfolgen. Bei der direkten Kühlung (Quenchen) wird ein Kühlmittel mit dem heißen Reaktionsprodukt in direkten Kontakt gebracht, um dieses abzukühlen. Bei der indirekten Kühlung wird dem Reaktionsprodukt Wärmeenergie entzogen, ohne das es direkt mit einem Kühlmittel in Kontakt kommt. Bevorzugt ist eine indirekte Kühlung, da diese in der Regel eine effektive Nutzung der auf das Kühlmittel übertragenen Wärmeenergie ermöglicht. Dazu kann das Reaktionsprodukt mit den Austauschflächen eines geeigneten Wärmetauschers in Kontakt gebracht werden. Das erwärmte Kühlmittel kann beispielsweise zur Erwärmung der Ausgangsstoffe in dem erfindungsgemäßen Verfahren oder in einem davon verschiedenen endothermen Verfahren eingesetzt werden. Des Weiteren kann die dem Reaktionsprodukt entzogene Wärme beispielsweise auch zum Betrieb eines Dampferzeugers eingesetzt werden. Möglich ist auch ein kombinierter Einsatz von direkter Kühlung (Vorquensch) und indirekter Kühlung, wobei durch direkte Kühlung (Vorquensch) das in Schritt c) erhaltene Reaktionsprodukt vorzugsweise auf eine Temperatur von kleiner 1000°C abgekühlt wird. Eine direkte Kühlung kann beispielsweise durch die Einspeisung von Quenchöl, Wasser, Dampf oder kalten Rückführgasen durchgeführt werden. In einer weiteren Ausführungsform kann ein Ringspaltbrenner verwendet werden, der sehr hohe und gleichmäßige Quenchraten ermöglicht und dem Fachmann an sich bekannt ist.

### Schritt d)

Zur Aufarbeitung kann das in Schritt c) erhaltene Reaktionsprodukt wenigstens einem Auftrennungs- und/oder Reinigungsschritt d) unterzogen werden. Dabei werden die gebildeten nanopartikulären Feststoffe von den übrigen Bestandteilen des Reaktionsprodukts isoliert. Hierzu können vorzugsweise Filter oder Zyklone eingesetzt werden. Weiterhin können die gebildeten nanopartikulären Feststoffe auch mittels Trocken- oder Nasselektroabscheidung gewonnen werden.

Das erfindungsgemäße Verfahren eignet sich somit zur kontinuierlichen Herstellung von nanopartikulären Feststoffen unter im Wesentlichen stationären Bedingungen. Wichtige Merkmale dieses Verfahrens sind eine schnelle Energiezufuhr auf hohem Temperaturniveau, in der Regel kurze und gleichförmige Verweilzeiten unter den Reaktionsbedingungen und ein rasches Abkühlen ("Abschrecken") der Reaktionsprodukte, um ein Agglomerieren der gebildeten nanopartikulären Primärpartikel oder eine zu weitgehende Umsetzung zu vermeiden. Eventuell zu erwartende störende Wechselwirkungen zwischen den gebildeten Partikeln und dem porösen Medium wurden nicht festgestellt.

Die Erfindung wird anhand des folgenden Beispiels näher erläutert.

### Beispiel:

Ein Partikelgenerator wie in Abbildung 1 beschrieben wurde zur Herstellung von nanopartikulärem Fe₂O₃ eingesetzt. Dazu wurde eine wässrige Lösung von Eisen(III)nitrat in einer Methangasflamme (Methan-Luft-Gemisch) umgesetzt. Die Temperatur innerhalb des Reaktors wurde mit einem Inertgasstrom auf 1000 - 1200°C eingestellt. In der Region A des Reaktors befand sich eine keramische Flammensperre, in der Region B wurde eine SiC-Keramik mit 10 Poren pro inch² (ppi) verwendet.

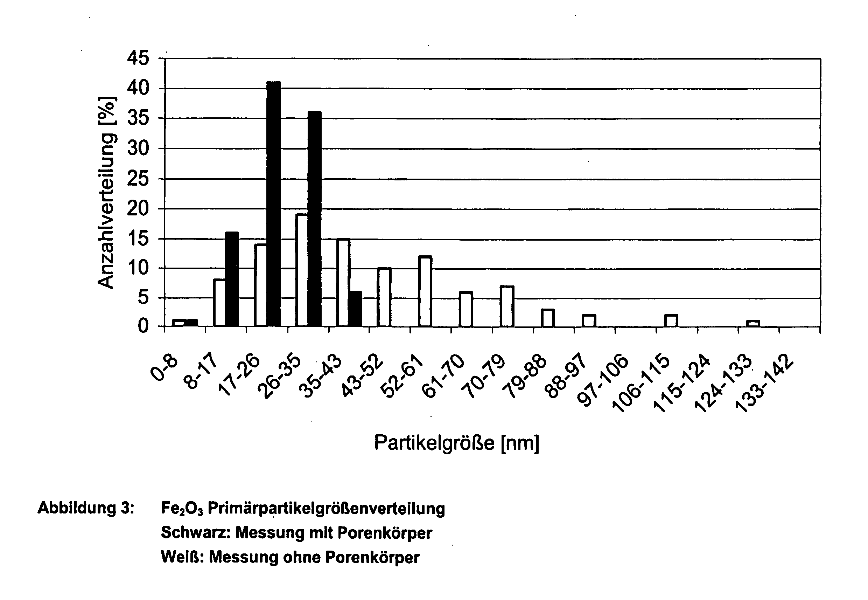

Der mittlere Primärpartikeldurchmesser der gebildeten Fe₂O₃-Teilchen betrug bei diesem Versuch 24 nm, wobei die Partikeldurchmesser von 7 bis 42 nm streuten. Die Standardabweichung der Teilchengrößenverteilung lag bei σ < 1.4 (s. Abb. 3).

Beim Betrieb des Partikelgenerators ohne Einsatz des porösen Mediums in Region B resultiert trotz Einsatz der Flammensperre eine Ungleichverteilung der Strömungsgeschwindigkeiten über der Austrittsoberfläche der Flammensperre. Die Primärpartikelgrößenverteilung der gebildeten Fe₂O₃-Teilchen zeigte in diesem Fall einen mittleren Primärpartikeldurchmesser von 40 nm und eine Streuung der Partikeldurchmesser zwischen 8 und 130 nm (s. Abb. 3). Die Standardabweichung der Teilchengrößenverteilung lag hier bei σ > 1.8.

## Patentansprüche

1. Verfahren zur Herstellung von nanopartikulären Feststoffen mittels Pecletzahl-stabilisierter Gasphasenumsetzung, **dadurch gekennzeichnet, dass** man
a) ein Reaktionsgas bereitstellt,
b) das Reaktionsgas durch wenigstens eine ein poröses Medium enthaltende Reaktionszone führt und dabei einer durch das Medium stabilisierten Umsetzung unterzieht, die zumindest teilweise im Innern des porösen Mediums erfolgt und bei der nanopartikuläre Primärpartikel gebildet werden, wobei sich die Leuchtzone vollständig innerhalb des porösen Mediums befindet,
c) das in Schritt b) erhaltene Reaktionsprodukt einer raschen Abkühlung unterzieht und
d) die gebildeten nanopartikulären Feststoffe isoliert.

2. Verfahren nach Anspruch 1, **dadurch gekennzeichnet, dass** in der Reaktionszone im Wesentlichen kein Temperaturgradient senkrecht zur Strömungsrichtung auftritt.

3. Verfahren nach einem der Ansprüche 1 oder 2, **dadurch gekennzeichnet, dass** das poröse Medium aus keramischem Material besteht.

4. Verfahren nach einem der Ansprüche 1 bis 3, **dadurch gekennzeichnet, dass** die Reaktionszone vollständig innerhalb des porösen Mediums liegt.

5. Verfahren nach einem der Ansprüche 1 bis 4, **dadurch gekennzeichnet, dass** das Porenvolumen des porösen Mediums mindestens 40%, bezogen auf das Gesamtvolumen des Mediums, beträgt.

6. Verfahren nach einem der Ansprüche 1 bis 5, **dadurch gekennzeichnet, dass** die Teilchengröße der nanopartikulären Feststoffe zwischen 1 bis 500 nm liegt und ihre Teilchengrößenverteilung eine Standardabweichung σ von kleiner als 1,5 aufweist.

7. Verfahren nach einem der Ansprüche 1 bis 6, **dadurch gekennzeichnet, dass** die Verweilzeit des Ausgangsgemisches in der Reaktionszone 0,005 s bis 2 s beträgt.

8. Verfahren nach einem der Ansprüche 1 bis 7, **dadurch gekennzeichnet, dass** die Gasphasenumsetzung bei Normaldruck abläuft.

9. Verfahren nach einem der Ansprüche 1 bis 8, **dadurch gekennzeichnet, dass** das poröse Medium mindestens ein katalytisch aktives Metall enthält.

## Claims

1. A process for producing nanoparticulate solids by means of a Péclet number-stabilized gas-phase reaction, which comprises
a) providing a reaction gas,
b) passing the reaction gas through at least one reaction zone comprising a porous medium and subjecting it to a reaction which is stabilized by the medium and occurs at least partly in the interior of the porous medium and in which nanoparticulate primary particles are formed, with the luminous zone being present completely within the porous medium,
c) subjecting the reaction product obtained in step b) to rapid cooling and
d) isolating the nanoparticulate solids formed.

2. The process according to claim 1, wherein essentially no temperature gradient perpendicular to the direction of flow occurs in the reaction zone.

3. The process according to either claim 1 or 2, wherein the porous medium comprises ceramic material.

4. The process according to any of claims 1 to 3, wherein the reaction zone is located completely within the porous medium.

5. The process according to any of claims 1 to 4, wherein the pore volume of the porous medium is at least 40%, based on the total pore volume of the medium.

6. The process according to any of claims 1 to 5, wherein the particle size of the nanoparticulate solids is in the range from 1 to 500 nm and its particle size distribution has a standard deviation σ of less than 1.5.

7. The process according to any of claims 1 to 6, wherein the residence time of the starting mixture in the reaction zone is from 0.005 s to 2 s.

8. The process according to any of claims 1 to 7, wherein the gas-phase reaction proceeds at atmospheric pressure.

9. The process according to any of claims 1 to 8, wherein the porous medium comprises at least one catalytically active metal.

## Revendications

1. Procédé de fabrication de solides nanoparticulaires au moyen d'une réaction en phase gazeuse stabilisée par un nombre de Péclet, **caractérisé en ce que** :
a) on fournit un gaz réactionnel,
b) on conduit le gaz réactionnel à travers au moins une zone réactionnelle contenant une matière poreuse et on le soumet à cette occasion à une réaction stabilisée par cette matière, qui se produit au moins partiellement à l'intérieur de la matière poreuse et au cours de laquelle des particules primaires nanoparticulaires sont formées, la zone lumineuse se trouvant entièrement à l'intérieur de la matière poreuse,
c) on soumet le produit réactionnel obtenu à l'étape b) à un refroidissement rapide, et
d) on isole les solides nanoparticulaires formés.

2. Procédé selon la revendication 1, **caractérisé en ce que** dans la zone réactionnelle, il n'apparaît essentiellement aucun gradient de température verticalement à la direction du courant.

3. Procédé selon l'une des revendications 1 ou 2, **caractérisé en ce que** la matière poreuse est constituée d'un matériau céramique.

4. Procédé selon l'une des revendications 1 à 3, **caractérisé en ce que** la zone réactionnelle est située entièrement à l'intérieur de la matière poreuse.

5. Procédé selon l'une des revendications 1 à 4, **caractérisé en ce que** le volume des pores de la matière poreuse est d'au moins 40 %, sur base du volume total de la matière.

6. Procédé selon l'une des revendications 1 à 5, **caractérisé en ce que** la grosseur de particule des solides nanoparticulaires est située entre 1 et 500 nm et sa répartition des grosseurs de particule présente une déviation standard σ plus petite que 1,5.

7. Procédé selon l'une des revendications 1 à 6, **caractérisé en ce que** la durée de séjour du mélange de départ dans la zone réactionnelle va de 0,005 s à 2 s.

8. Procédé selon l'une des revendications 1 à 7, **caractérisé en ce que** la réaction en phase gazeuse se déroule à pression normale.

9. Procédé selon l'une des revendications 1 à 8, **caractérisé en ce que** la matière poreuse contient au moins un métal catalytiquement actif.
